# EUROPÄISCHE PATENTSCHRIFT

(11) **EP 1 375 285 B1**
(45) Veröffentlichungstag und Bekanntmachung des Hinweises auf die Patenterteilung: **10.11.2004**
(21) Anmeldenummer: 03012580.1
(22) Anmeldetag: 03.06.2003
(51) Int. Cl.: B60T 13/58, F16H 61/46

(54) **Bremssystem für Landwirtschaftsmaschinen**
Brake system for agricultural machines
Système de freinage pour machines agricoles

(30) Priorität: 25.06.2002 DE 10228267
(43) Veröffentlichungstag der Anmeldung: 02.01.2004
(73) Patentinhaber: Case Harvesting Systems GmbH, 01844 Neustadt (DE)
(72) Erfinder: Mende, Ingo, Dipl.-Ing., 01277 Dresden (DE)
(74) Vertreter: Feldkamp, Rainer, Dipl.-Ing.

(56) Entgegenhaltungen:
- DE-A- 19 956 469
- US-A- 4 050 248
- US-A- 6 135 580
- US-B1- 6 202 783

## Beschreibung

Die Erfindung betrifft ein Bremssystem für Landwirtschaftsmaschinen mit Bremskraftverstärkern im Zweikreisbremssystem und Hydraulikpumpenantrieb mit den Merkmalen nach dem Oberbegriff des Patentanspruchs.

Aus der Kraftfahrzeugtechnik sind Bremskraftverstärker im Zweikreisbremssystem mit Hydraulikantrieb in verschiedenen Ausführungen bekannt (DE 32 09 592 A1; DE 36 25 14 A1; DE 37 39 298 A1). Diese für Kraftfahrzeuge entwickelten Systeme können in der Landmaschinentechnik nur angepaßt verwendet werden und dazu ist mindestens Konstruktions- und Entwicklungsarbeit erforderlich.
Für Land- und Arbeitsmaschinen ist es allgemein bekannt, die Hauptbremse durch den Fahrantrieb zu verstärken und eine zweite Bremse bei Zweikreisbremsen manuell ohne Verstärkung zu betätigen. Das hat den Nachteil, daß erheblicher Kraftaufwand insbesondere bei Vollbremsung für die zweite Bremse erforderlich ist und keine Synchronisation der beiden Bremssysteme erfolgt.
Dazu ist aus der DE 17 80 281 A 1 ein Steuer- und Regelsystem für die Beaufschlagung der Kupplung und Bremse von Arbeitsmaschinen mit durch Pumpen aufrechterhaltenem Hydraulikkreislauf bekannt, bei dem ein Betätigungsorgan über ein Hebelsystem eine kraftschlüssige Verbindung zu einem den Bremsdruck regelnden Ventil und über ein Gestänge zu einem eine Kupplung steuernden Ventil so herstellt, daß bei angezogener Bremse die Kupplung gelöst ist. Eine Weiterentwicklung hierzu ist in der DE 35 05 587 A1 zu sehen, in der ein Traktor mit aufgesetzter Arbeitsmaschine beschrieben ist.

Für eine geländegängige Arbeitsmaschine ist es aus der DE 29 52 281 A1 bekannt, eine erste Pumpeinrichtung zur Lieferung hydraulischer Druckflüssigkeit vorzusehen, um eine Lenk- Steuerventilanordnung zu steuern und eine Werkzeugbetätigungseinrichtung zu betreiben. Eine zweite Pumpeinrichtung liefert Druckflüssigkeit an einen hydraulischen Drehmomentwandler, wobei eine Bremseinrichtung mit der Werkzeug- Steuerventilanordnung und mit dem Drehmomentwandler verbunden ist und die Bremseinrichtung von einem Transmissionsschmierkreis mit Druckflüssigkeit versorgt wird.

Aus der US-A-6 135 580 ist ein Bremssystem mit den wesentlichen technischen Merkmalen des Oberbegriffs von Anpruche 1 bekannt.

Diese für Land- und Arbeitsmaschinen vorgesehenen Bremssysteme sind Spezialentwicklungen und für den Betrieb einer Landwirtschaftsmaschine, mit der auch Straßenfahrten erfolgen, bei den heutigen Verkehrsbedingungen nur bedingt brauchbar.

Ziel und Aufgabe der Erfindung ist es, ein Bremssystem für Landwirtschaftsmaschinen mit Bremskraftverstärker im Zweikreisbremssystem und Hydraulikpumpenantrieb zu finden, das ein schnelles, koordiniertes Abbremsen im Straßenverkehr, ohne die Aufmerksamkeit des Fahrzeugführers zu beeinträchtigen, ermöglicht.

Die Lösung dieser Aufgabe ist Gegenstand der im ersten Anspruch offenbarten Erfindung.

Das Bremssystem für Landwirtschaftsmaschinen mit zwei Bremskreisen, die mittels einer als Fußpedal ausgebildeten hydraulischen Fremdkraftbremse betätigt werden, hat einen Bremskraftverstärker, der aus einer durch einen Antriebsmotor über eine Zentralwelle angetriebenen Arbeitshydraulikpumpe, einem Prioritätsventil, einem invertierten Wechselventil und hydropneumatischen Speichern für die benötigte Hydraulikflüssigkeit besteht. Die Bremskreise sind über eine Leitung zu einem Druckreduzierventil mit der Verstellpumpe des Fahrantriebs verbunden, wobei das Druckreduzierventil in Abhängigkeit eines angelegten Steuerdrucks die Verbindung von Pumpenstellkammern zu einem Haupttank öffnet. Die Öffnung zum Haupttank bedeutet Abbau des Steuerdrucks. Das Schließen bewirkt einen ungehinderten Steuerdruckaufbau in den Pumpenstellkammern nur in Abhängigkeit von der Antriebsmotordrehzahl. Durch den Druckabbau in den Pumpenstellkammern schwenkt die Verstellpumpe zurück und über einen Hydraulikmotor erfolgt ein weiteres mit den Bremskreisen koordiniertes Abbremsen des Fahrwerkes.
Durch diese Kombination von hydrostatischer und dynamischer Bremsleistung wird eine optimale Bremswirkung erreicht, so daß das Bremssystem den gestiegenen Anforderungen an Geschwindigkeitsbereiche genügt. Wird eine Verzögerung über beide Betriebsbremsanlagen (hydrostatischer Fahrantrieb und dynamische Bremsanlage) benötigt, wird das Druckreduzierventil mit mindestens einem Bremskreis und über das Wechselventil mit den Pumpenstellkammern mit dem Hydrauliktank verbunden.
Beim Fahrbetrieb wird eine Verzögerung über das Fußpedal (Fremdkraftbremse) bereits durch Verlassen des Gaspedals eingeleitet und das Signal an den Antriebsmotor zur Drehzahlverminderung gegeben. Das Fußpedal seinerseits erzeugt proportional zur Fußkraft des Bedieners einen Druck in den Bremskreisen und gleichzeitig liegt am Steuerdruckanschluß des Druckreduzierventils ein Druck an, der dafür sorgt, daß die Verbindung Pumpenstellkammer zum Haupttank vom Steuerkolben des Druckreduzierventiles freigegeben wird.
Durch diese Verbindung schwenkt die Verstellpumpe ein und die Bremswirkung des hydrostatischen Antriebes setzt ein. Durch geschickte Auswahl der Blendenbestückung im Druckreduzierventil kann die Einschwenkzeit der Verstellpumpe so verändert werden, daß die hydrostatische Bremswirkung bereits vor der dynamischen Bremswirkung einsetzt. Durch diese Anordnung und die Verbindung von Drehzahlsteuerung (Gaspedal), Antriebsmotor und Fremdkraftbremse wird die Bedienung mit den genannten Vorteilen auf die Fußbedienung umgelegt, so daß der Bediener ungehindert die Landwirtschaftsmaschine im Straßenverkehr führen kann.

Die Erfindung soll nachstehend an Hand eines Ausführungsbeispiels näher erläutert werden. Die zugehörige Zeichnung zeigt ein Blockschaltbild des Fahrantriebs mit einer erfindungsgemäßen Bremsanlage für eine landwirtschaftliche Arbeitsmaschine.
An einem als zentrale Antriebsquelle der landwirtschaftlichen Arbeitsmaschine dienenden Dieselmotor 1 ist über eine Zentralwelle 2 eine Verstellpumpe 3 fest angekoppelt. An die Verstellpumpe 3 ist über eine Hydraulikleitung 4 ein Hydraulikmotor 5 angeschlossen, dem ein Fahrwerk 6 folgt. An die Zentralwelle 2 ist weiterhin eine Arbeitshydraulikpumpe 7 angekoppelt. Von der Arbeitshydraulikpumpe 7 werden über ein Prioritätsventil 8 und ein invertiertes Wechselventil 9 hydropneumatische Speicher 10 gespeist. In die vom Wechselventil 9 zu den zwei Bremskreisen 11 führenden Leitungen 12 ist eine als Fußpedal 13 ausgebildete hydraulische Fremdkraftbremse 14 eingefügt. An die hydraulische Fremdkraftbremse 14 ist über eine Leitung 15 ein Druckreduzierventil 16 angeschlossen, das in Abhängigkeit vom angelegten Steuerdruck die Verbindung von Pumpenstellkammem 17 zu einem Haupttank 18 sperrt oder öffnet.

Bei geöffnetem Haupttank 18 wird der Druck zu einer Pumpenverstellung 19 abgebaut und die Verstellpumpe 3 schwenkt über den Hydraulikmotor 5 das Fahrwerk 6 zusätzlich bremsend zurück.

### Aufstellung der verwendeten Bezugszeichen

- 1: Dieselmotor
- 2: Zentralwelle
- 3: Verstellpumpe
- 4: Hydraulikleitung
- 5: Hydraulikmotor
- 6: Fahrwerk
- 7: Arbeitshydraulikpumpe
- 8: Prioritätsventil
- 9: Wechselventil
- 10: Speicher
- 11: Bremskreis
- 12: Leitung
- 13: Fußpedal
- 14: Fremdkraftbremse
- 15: Leitung
- 16: Druckreduzierventil
- 17: Pumpenstellkammer
- 18: Haupttank
- 19: Pumpenverstellung

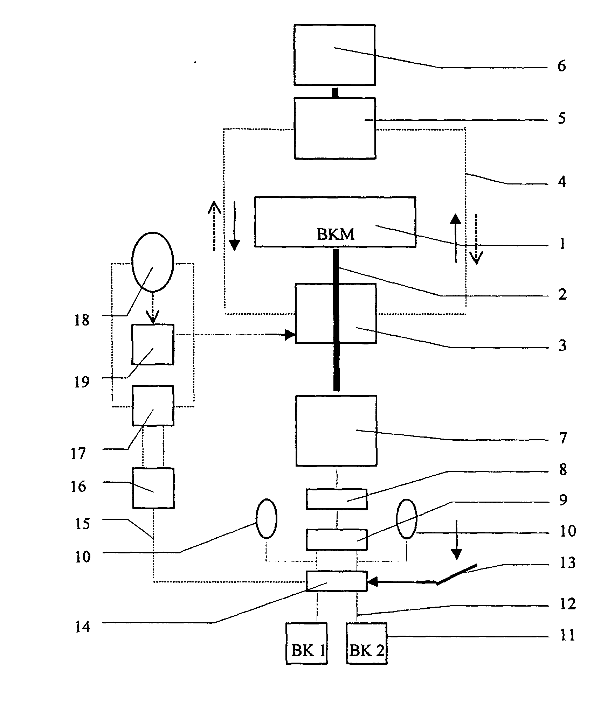

## Patentansprüche

1. Bremssystem für Landwirtschaftsmaschinen **gekennzeichnet durch** zwei Bremskreise, die mittels einer als Fußpedal (13) ausgebildeten hydraulischen Fremdkraftbremse (14) betätigt werden, mit einem Bremskraftverstärker, der aus einer **durch** einen Antriebsmotor (1) über eine Zentralwelle (2) angetriebenen Arbeitshydraulikpumpe (7), einem nachfolgenden Prioritätsventil (8), einem invertierten Wechselventil (9) und hydropneumatischen Speichern (10) für die benötigte Hydraulikflüssigkeit besteht wobei die Bremskreise (11) über eine Leitung (15) zu einem Druckreduzierventil (16) mit einer Verstellpumpe (3) verbunden sind, wobei das Druckreduzierventil (16) in Abhängigkeit eines angelegten Steuerdrucks die Verbindung von Pumpenstellkammern (17) zu einem Haupttank (18) öffnet, ein Druckabbau in den Pumpenstellkammern (17) erfolgt, die Verstellpumpe (3) zurückschwenkt und der das Fahrwerk (6) antreibende Hydraulikmotor (5) daraufhin als eine weitere mit den Bremskreisen (11) koordinierte Bremse des Fahrwerkes (6) einsetzt.

## Claims

1. A braking system for agricultural machines **characterised by** two brake circuits, which are operated by a hydraulic power brake (14) formed as a foot pedal (13), with a brake servo unit, which consists of hydraulic pump (7) driven by a drive motor (1) via a central shaft (2), a subsequent priority valve (8), an inverted shuttle valve (9) and hydro pneumatic reservoirs (10) for the necessary hydraulic fluid, in which the brake circuits (11) are connected via a pipe (15) to a pressure-reducing valve (16) with a variable displacement pump (3), where the pressure-reducing valve (16) opens the connection for the pump-regulating chambers (17) to a main tank (18) in accordance with the applied control pressure, a pressure decay in the pump-regulating chambers (17) occurs, the variable displacement pump (3) cuts in again and the hydraulic motor (5) driving the drive unit (6) is employed as a further brake for the drive unit (6) coordinated with the braking circuits (11).

## Revendications

1. Système de freinage pour machines agricoles **caractérisé par** deux circuits de freinage qui sont actionnés au moyen d'un frein hydraulique (14) actionné par une force extérieure ayant la forme d'une pédale (13), avec un amplificateur de l'effort de freinage qui est constitué par une pompe hydraulique de travail actionnée par un moteur de commande (1) via un arbre central (2), une soupape prioritaire en aval (8), un sélecteur de circuit inversé (9) et des réservoirs hydropneumatiques (10) pour le liquide hydraulique nécessaire, les circuits de freinage (11) étant reliés via une conduite (15) à un limiteur de pression (16), avec une pompe de réglage (3) dans ce contexte, le limiteur de pression (16) ouvre, en fonction d'une pression de commande appliquée, la liaison entre les chambres de réglage de la pompe (17) et un réservoir principal (18), commande une diminution de la pression dans les chambres de réglage de la pompe (17), la rotation de la pompe de réglage (3) est inversée et le moteur hydraulique (5) qui commande le mécanisme de roulement (6) est utilisé comme un autre frein du mécanisme de roulement (6) coordonné avec les circuits de freinage (11)
